# FASCICULE DE BREVET EUROPEEN

(11) **EP 0 617 909 B1**
(45) Date de publication et mention de la délivrance du brevet: **04.03.1998**
(21) Numéro de dépôt: 94104081.8
(22) Date de dépôt: 16.03.1994
(51) Int. Cl.: A47J 37/06

(54) **Appareil électrique de cuisson**
Elektrisches Gargerät
Electric cooking appliance

(30) Priorité: 30.03.1993 FR 9303693
(43) Date de publication de la demande: 05.10.1994
(73) Titulaire: MOULINEX S.A., 75008 Paris (FR)
(72) Inventeur: Collas, Guy Jacques, F-14123 Ifs (FR); Lereverend, Jean, F-14000 Caen (FR)
(74) Mandataire: May, Hans Ulrich, Dr.

(56) Documents cités:
- AT-A- 377 074
- CH-A- 680 185
- DE-A- 2 443 359
- DE-A- 2 917 071
- FR-A- 2 624 587
- US-A- 2 769 878
- US-A- 2 851 576

## Description

L'invention se rapporte aux appareils électriques de cuisson comprenant un socle en forme de cadre à fond ouvert, un bac amovible destiné à reposer sur ledit socle, une grille de cuisson des aliments placée au-dessus du bac, et une résistance chauffante électrique disposée sous la grille au moyen d'un support et comprenant une poignée adaptée à reposer dans un logement du socle.

Lors de l'utilisation d'un tel appareil, il s'avère que l'utilisateur peut placer la résistance chauffante et la grille en position correcte sur le socle sans que le bac y ait été monté, et déclencher l'opération de cuisson. Il s'ensuit que la surface du plan de travail sur lequel repose l'appareil peut être endommagé par le rayonnement calorifique de la résistance et même prendre feu. Avec les appareils de ce genre, il peut aussi arriver que la résistance chauffante déjà branchée soit posée directement dans le bac, ou sur le plan de travail en risquant de provoquer des brûlures à l'utilisateur ou au plan de travail.

L'invention a notamment pour but de supprimer ces risques. Dans un appareil selon l'invention, la poignée comporte un interrupteur de commande de l'alimentation électrique de la résistance dont la fermeture est subordonnée, d'une part, au positionnement correct de la poignée dans le logement, et, d'autre part, à l'actionnement d'un transmetteur solidaire dudit socle et adapté à détecter la présence du bac dans le socle.

Grâce à cette caractéristique, on comprendra que pour obtenir un fonctionnement sûr de l'appareil, la présence du socle, du bac, ainsi que le positionnement correct de la poignée sur le socle soient nécessaires.

Les caractéristiques et avantages de l'invention ressortiront d'ailleurs de la description qui va suivre, à titre d'exemple non limitatif, en référence aux dessins annexés dans lesquels :
- la figure 1 est une vue éclatée d'un appareil de cuisson illustrant l'art antérieur ;
- la figure 2 est une vue analogue à la figure 1 dans laquelle un socle et une poignée de résistance sont équipés d'un transmetteur et d'un interrupteur selon l'invention ;
- la figure 3 est une vue partielle en coupe à échelle agrandie illustrant le montage du socle et de la poignée de résistance selon l'invention en présence d'un bac qui vient appuyer sur le transmetteur ;
- la figure 4 est une vue éclatée agrandie en perspective d'une variante de réalisation d'un transmetteur capteur de température destiné à actionner un interrupteur et un thermostat.

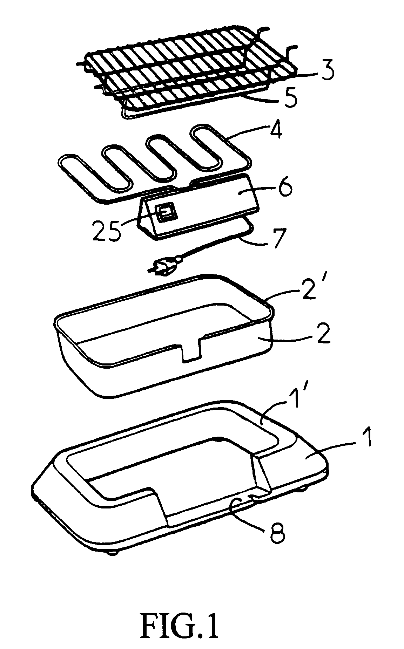

L'appareil de cuisson représenté à la figure 1 est un gril du type horizontal et comprend un socle 1 présentant la forme d'un cadre à fond ouvert réalisé en un matériau plastique, un bac métallique amovible 2 destiné à venir reposer par une bordure 2' sur le bord supérieur 1' du socle et susceptible de contenir de l'eau de manière à éviter les fumées occasionnées par la récupération des graisses de cuisson, une grille 3 de cuisson des aliments placée au-dessus du bac 2, ainsi qu'une résistance chauffante électrique 4 du type résistance blindée conformée selon un parcours sinueux s'étendant dans un plan et maintenue sur la grille par un support 5 solidaire de cette grille 3. Les extrémités de la résistance 4 sont montées dans une poignée creuse 6 réalisée en un matériau isolant thermique et sont reliées à une source d'alimentation électrique au moyen d'un cordon électrique 7. La poignée 6 est adaptée à reposer dans un logement 8 pratiqué dans un tronçon du cadre du socle 1 et présente une forme complémentaire audit logement de manière à occuper une position définie lors de son emboîtement.

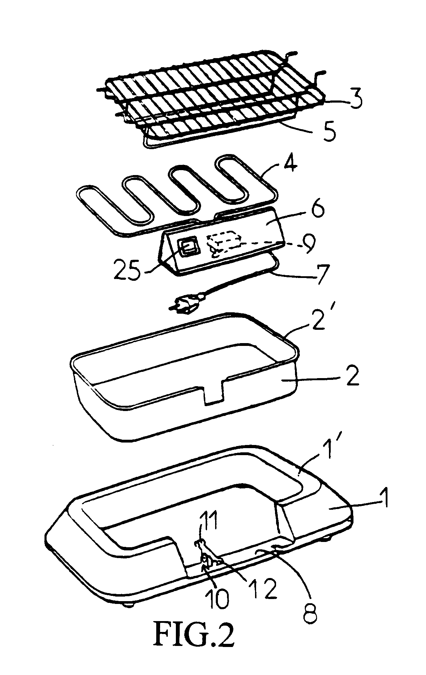

Comme illustré à la figure 2 et selon l'invention, la poignée 6 comporte un interrupteur 9 de commande de l'alimentation électrique de la résistance 4 dont la fermeture est subordonnée, d'une part, au positionnement correct de la poignée 6 dans le logement 8, et, d'autre part, à l'actionnement d'un transmetteur 10 solidaire du socle 1 et adapté à détecter la présence du bac 2 dans le socle 1.

Ainsi, grâce à cette construction on obtient un dispositif de sécurité qui empêche toute fausse manoeuvre de l'appareil puisque l'interrupteur 9 ne peut être actionné que par le transmetteur qui est solidaire du socle et dont l'actionnement est lui-même subordonné à la présence du bac 2 dans le socle 1.

Le transmetteur 10 est un organe monté mobile dans le socle 1 et dont une extrémité 11 est destinée à venir au contact du bac 2 et dont l'autre extrémité 12 est destinée à venir commander l'interrupteur 9.

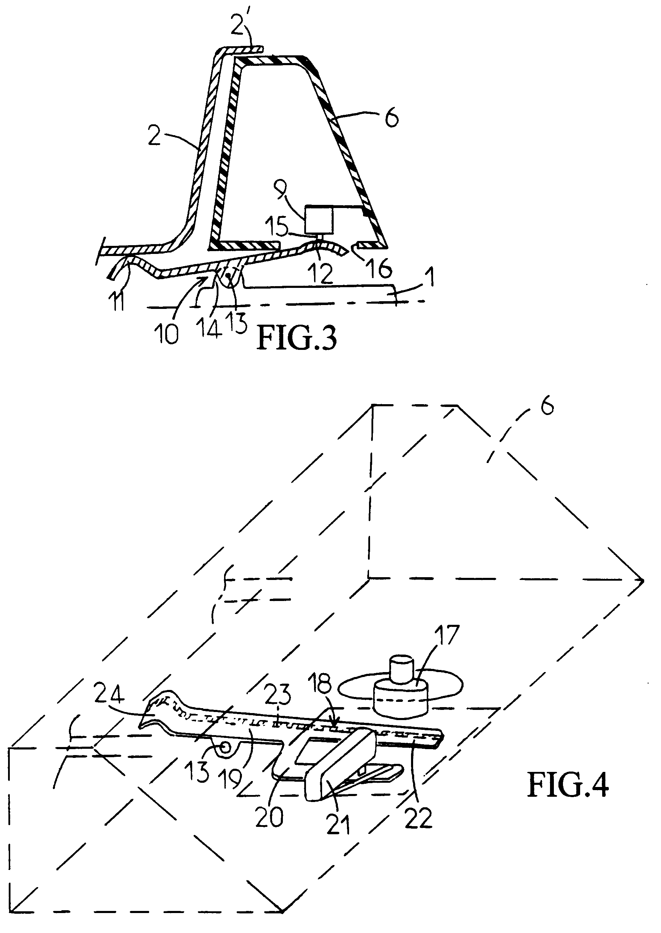

Selon une réalisation préférée, et comme on le voit mieux sur la figure 3, le transmetteur 10 est monté pivotant autour d'un axe 13 porté par un pivot 14 solidaire du socle 1, tandis que l'interrupteur 9 est du type micro-interrupteur comportant une touche de commande 15 qui est logée dans la poignée 6 en regard d'une ouverture 16 pratiquée dans sa paroi inférieure et dont les dimensions sont telles qu'elles permettent le passage de l'extrémité 12 en vue de l'actionnement de la touche 15 lorsque la poignée 6 est correctement positionnée dans son logement 8.

Selon une variante de réalisation non représentée, le transmetteur 10 est monté coulissant sensiblement horizontalement dans un guide solidaire du socle et son extrémité tournée vers l'intérieur du socle 1 présente une surface de glissement, arrondie ou en pente, de manière à faciliter sa manoeuvre lors de l'introduction du bac 2 dans le socle 1, tandis que la poignée 6 présente une ouverture pratiquée dans sa paroi verticale tournée vers l'intérieur du socle, la touche de commande de l'interrupteur étant placée en regard de cette ouverture.

Selon un autre mode de réalisation non représenté, on peut envisager, à la place d'un microinterrupteur à touche de commande, un interrupteur du type ILS commandé par un aimant porté par une extrémité du transmetteur. Grâce à cet interrupteur, il n'est plus nécessaire de pratiquer des ouvertures dans la poignée et donc la poignée est rendue étanche pour le nettoyage.

Dans un but de sécurité supplémentaire et selon une autre caractéristique de l'invention , la poignée 6 comporte , outre un transmetteur 10 , un détecteur de température 17 qui est influencé par un palpeur mobile 18 solidaire du socle 1 et adapté à venir au contact du bac lorsqu'il est inséré dans le socle 1.

Afin d'obtenir une réalisation économique et comme illustré à la figure 4, ce palpeur mobile référencé en 18 est associé à un transmetteur mobile 19 métallique par exemple en aluminium qui est monté pivotant en 13 et qui comporte une extrémité fourchue dont une branche 20 est destinée à constituer par son extrémité l'actionneur d'un interrupteur 21, et dont l'autre branche 22 est destinée à venir au contact du détecteur 17 qui, dans cet exemple, est la tête d'un thermostat réarmable.

Dans une autre réalisation , et telle que représentée en traits interrompus à la figure 4, le transmetteur est réalisé en un matériau plastique moulé résistant à la chaleur et le palpeur est réalisé par une piste métallique 23 conductrice de la chaleur plaquée dans le matériau plastique et s'étendant depuis l'extrémité 22 jusqu'à l'extrémité libre 24 qui vient en contact avec le bac 2.

Le fonctionnement de l'appareil va maintenant être décrit au regard des figures 2 et 3 et nous supposerons que l' appareil représenté en pièces détachées fait suite, par exemple, à un lavage après cuisson.

L'utilisateur insère le bac 2 dans le socle 1 jusqu'à ce que son bord 2' vienne reposer sur le bord supérieur 1' du cadre. Au cours de ce mouvement, le fond du bac 2 vient agir sur l'extrémité 11 du transmetteur 10 qui le fait pivoter autour de l'axe 13 de manière à amener l'extrémité 12 en une position haute. Puis l'utilisateur, après avoir fixé la résistance chauffante 4 sur la grille 3, introduit par le haut l'ensemble ainsi formé de manière à obtenir une position correcte de la poignée 6 dans son logement 8, ainsi que le repos de la grille 3 sur le bord du bac 2. On comprendra que lorsque la poignée 6 descend dans son logement, l'extrémité 12 pénètre dans l'ouverture 16 et vient actionner la touche 15 du micro-interrupteur 9 autorisant ainsi l'alimentation électrique de la résistance. Bien entendu, cette poignée peut être équipée d'un interrupteur marche-arrêt 25 monté en série avec le micro-interrupteur 9 de manière à pouvoir mieux piloter les opérations de cuisson sans maniement de la poignée.

Grâce à ce dispositif de sécurité constitué par l'interrupteur 9 et le transmetteur 10, on obtient un appareil de cuisson sûr et répondant aux normes de sécurité en vigueur ou à venir puisque le fonctionnement de la résistance chauffante 4 ne peut être obtenue que par la présence du bac 2 et la mise en place correcte de la poignée 6 dans la socle 1.En outre , dès que l'utilisateur soulève ou enlève l'ensemble grille-résistance au moyen de la poignée 6 , la touche 15 du micro-interrupteur 21 échappe à l'extrémité 12 du transmetteur 10 et coupe l'alimentation de la résistance.

Dans le cas où le constructeur souhaite offrir également un dispositif de sécurité thermique, il suffit de remplacer le transmetteur 10 par le transmetteur 19 de la figure 4. Ainsi, si l'utilisateur oublie de mettre de l'eau dans le bac 2, la température de la paroi du bac s'élève de façon anormale et se transmet par conduction à l'extrémité 24 en contact avec le bac 2 , puis, soit par le transmetteur lui-même réalisé en métal, soit par la piste conductrice 23, chemine jusqu'au détecteur de température 17 qui coupe ainsi l'alimentation électrique de la résistance évitant ainsi la formation de fumée importante dû à l'écoulement des graisses et même des risques d'inflammation de ces graisses receuillies dans le bac 2 .

## Revendications

1. Appareil électrique de cuisson comprenant un socle (1) en forme de cadre à fond ouvert, un bac amovible (2) destiné à reposer sur ledit socle, une grille (3) de cuisson des aliments placée au-dessus du bac (2), et une résistance chauffante électrique (4) disposée sous la grille (3) au moyen d'un support (5) et comprenant une poignée (6) adaptée à reposer dans un logement (8) du socle (1),
**caractérisé en ce que** la poignée (6) comporte un interrupteur (9) de commande de l'alimentation électrique de la résistance (4) dont la fermeture est subordonnée, d'une part, au positionnement correct de la poignée (6) dans le logement (8), et, d'autre part, à l'actionnement d'un transmetteur (10) solidaire dudit socle et adapté à détecter la présence du bac (2) dans le socle (1).

2. Appareil électrique de cuisson selon la revendication 1,
**caractérisé en ce que** le transmetteur (10) est un organe monté mobile dans le socle (1) dont une extrémité (11) est destinée à venir au contact du bac (2) et dont l'autre extrémité (12) est destinée à venir commander l'interrupteur (9).

3. Appareil électrique de cuisson selon la revendication 2,
**caractérisé en ce que** l'organe mobile (10) est monté pivotant autour d'un axe (13) solidaire du socle (1).

4. Appareil électrique de cuisson selon la revendication 2,
**caractérisé en ce que** l'organe mobile (10) est monté coulissant dans un guide solidaire du socle (1).

5. Appareil électrique de cuisson selon l'une quelconque des revendications 2 à 4,
**caractérisé en ce que** le socle (1) présente la forme d'un cadre à fond ouvert dont un tronçon présente un logement (8) qui comporte le transmetteur (10), tandis que la poignée (6) présente une forme complémentaire à celle du logement et comporte une ouverture (16) destinée à permettre le passage de l'extrémité (12) de l'organe mobile (10) en vue de l'actionnement de l'interrupteur (9) montée dans la poignée (6).

6. Appareil électrique de cuisson selon l'une quelconque des revendications précédentes,
**caractérisé en ce que** la poignée (6) comporte un détecteur de température (17) qui est influencé par un palpeur mobile (18) solidaire du socle (1) et adapté à venir au contact du bac (2) lorsqu'il est monté dans le socle (1).

7. Appareil électrique de cuisson selon la revendication 6,
**caractérisé en ce que** le palpeur (18) est associé à un transmetteur mobile (19) de détection de présence du bac (2).

8. Appareil électrique de cuisson selon la revendication 7,
**caractérisé en ce que** le transmetteur (19) est réalisé en une pièce métallique et comporte une extrémité fourchue dont une branche (20) est destinée à commander un interrupteur (9-21), et dont l'autre branche (22) est destinée à venir au contact du détecteur (17).

9. Appareil électrique de cuisson selon la revendication 7,
**caractérisé en ce que** le transmetteur (19) est réalisé en un matériau plastique moulé résistant à la chaleur et le palpeur est réalisé par une piste métallique (23) conductrice de la chaleur et destinée à transmettre la température du bac au détecteur (17).

## Claims

1. Electric cooking appliance comprising a base (1) in the form of a frame with an open bottom, a removable tank (2) designed to rest on the said base, a grille (3) for cooking foodstuffs placed above the tank (2), and an electric heating element (4) disposed beneath the grille (3) by means of a support (5) and comprising a handle (6) adapted to rest in a housing (8) in the base (1),
characterised in that the handle (6) has a switch (9) controlling the supply of electricity to the element (4), the closure of which is subject, on the one hand, to the correct positioning of the handle (6) in the housing (8) and, on the other hand, to the activation of a transmitter (10) fixed to the said base and adapted to detect the presence of the tank (2) in the base (1).

2. Electric cooking appliance according to Claim 1,
characterised in that the transmitter (10) is a device movably mounted in the base (1), one end of which (11) is designed to come into contact with the tank (2) and the other end of which (12) is designed to control the switch (9).

3. Electric cooking appliance according to Claim 2,
characterised in that the movable device (10) is pivotally mounted about a shaft (13) fixed to the base (1).

4. Electric cooking appliance according to Claim 2,
characterised in that the movable device (10) is slidably mounted in a guide fixed to the base (1).

5. Electric cooking appliance according to any one of Claims 2 to 4,
characterised in that the base (1) is in the form of a frame with an open bottom, a section of which has a housing (8) which includes the transmitter (10), while the handle (6) has a shape complementary to that of the housing and has an opening (16) designed to permit the passage of the end (12) of the movable device (10) in order to actuate the switch (9) mounted in the handle (6).

6. Electric cooking appliance according to any one of the preceding claims,
characterised in that the handle (6) has a temperature detector (17) which is influenced by a movable sensor (18) fixed to the base (1) and adapted to come into contact with the tank (2) when it is mounted in the base (1).

7. Electric cooking appliance according to Claim 6,
characterised in that the sensor (18) is associated with a movable transmitter (19) for detection of the presence of the tank (2).

8. Electric cooking appliance according to Claim 7,
characterised in that the transmitter (19) is produced from a metal piece and has a forked end, one arm (20) of which is designed to control a switch (9-21) and the other arm (22) of which is designed to make contact with the detector (17).

9. Electric cooking appliance according to Claim 7,
characterised in that the transmitter (19) is produced from a moulded heat-resistant plastic and the sensor is formed by a metal track (23) which conducts heat and is designed to transmit the temperature from the tank to the detector (17).

## Patentansprüche

1. Elektrisches Kochgerät mit einem Sockel (1) in Form eines unten offenen Rahmens, einem auf dem Sockel ruhenden abnehmbaren Behälter (2), einem über dem Behälter (2) angeordneten Rost (3), auf welchem die Lebensmittel gegart werden, und einem durch ein Halteelement (5) unter dem Rost (3) angeordneten Heizwiderstand (4), der einen in einem Aufnahmesitz (8) des Gehäuses ruhenden Griff (6) aufweist, **dadurch gekennzeichnet**, **daß** der Griff (6) einen Schalter (9) zur Steuerung der Stromzufuhr des Heizwiderstands (4) aufweist, der nur dann geschlossen werden kann, wenn einerseits der Griff (6) korrekt in den Aufnahmesitz (8) eingesetzt ist und andererseits ein mit dem Sockel fest verbundenes Übertragungselement (10) betätigt wird, das die Anwesenheit des Behälters (2) im Sockel (1) feststellt.

2. Elektrisches Kochgerät nach Anspruch 1, **dadurch gekennzeichnet**, **daß** des Übertragungselement (10) ein im Sockel (1) beweglich montiertes Element ist, dessen eines Ende (11) in Kontakt mit dem Behälter (2) tritt und dessen anderes Ende (12) den Schalter (9) steuert.

3. Elektrisches Kochgerät nach Anspruch 2, **dadurch gekennzeichnet**, **daß** das bewegliche Übertragungselement (10) um eine mit dem Sockel (1) fest verbundene Achse (13) schwenkbar montiert ist.

4. Elektrisches Kochgerät nach Anspruch 2, **dadurch gekennzeichnet**, **daß** das bewegliche Element (10) in einer mit dem Sockel (1) fest verbundenen Führungsschiene verschiebbar montiert ist.

5. Elektrisches Kochgerät nach einem der Ansprüche 2 bis 4, **dadurch gekennzeichnet**, **daß** der Sockel (1) die Form eines unten offenen Rahmens aufweist, von dem ein Teilstück einen Aufnahmesitz (8) aufweist, der das Übertragungselement (10) enthält, während der Griff (6) eine zum Aufnahmesitz komplementäre Form hat und eine Öffnung (16) aufweist, die dem Ende (12) des beweglichen Elements (10) den Durchgang zur Betätigung des im Griff (6) angeordneten Schalters (9) ermöglicht.

6. Elektrisches Kochgerät nach einem der vorhergehenden Ansprüche, **dadurch gekennzeichnet**, **daß** der Griff (6) einen Temperatursensor (17) aufweist, der von einem mit dem Sockel (1) fest verbundenen beweglichen Fühler (18) beeinflußt wird, der mit dem Behälter (2) in Kontakt tritt, wenn dieser in den Sockel (1) eingesetzt ist.

7. Elektrisches Kochgerät nach Anspruch 6, **dadurch gekennzeichnet**, **daß** der Fühler (18) mit einem beweglichen Übertragungselement (19) in Verbindung steht, welches die Anwesenheit des Behälters (2) feststellt.

8. Elektrisches Kochgerät nach Anspruch 7, **dadurch gekennzeichnet**, **daß** das Übertragungselement (19) aus einem Metallstück ausgebildet ist und ein gegabeltes Ende aufweist, dessen einer Ast (20) einen Schalter (9-21) steuert und dessen anderer Ast (22) in Kontakt mit dem Temperatursensor (17) kommt.

9. Elektrisches Kochgerät nach Anspruch 7, **dadurch gekennzeichnet**, **daß** das Übertragungselement (19) aus einem geformten hitzebeständigen Kunststoffmaterial ausgebildet ist und daß der Fühler durch einen wärmeleitenden Metallstreifen (23) gebildet ist, der die Temperatur des Behälters dem Temperatursensor (17) übermittelt.
